# EUROPÄISCHE PATENTSCHRIFT

(11) **EP 3 838 602 B1**
(45) Veröffentlichungstag und Bekanntmachung des Hinweises auf die Patenterteilung: **30.03.2022**
(21) Anmeldenummer: 19217599.0
(22) Anmeldetag: 18.12.2019
(51) Int. Cl.: B41J 3/407, B41J 15/04, B41J 25/34, B41J 25/304, G01G 23/42, G01G 19/414, G07G 1/00

(54) **ETIKETTENDRUCKER**
LABEL PRINTER
IMPRIMANTE D'ÉTIQUETTES

(43) Veröffentlichungstag der Anmeldung: 23.06.2021
(73) Patentinhaber: Bizerba SE & Co. KG, 72336 Balingen (DE)
(72) Erfinder: Reiss, Rafael, 72336 Balingen (DE); Offermann, Holger, 72469 Meßstetten (DE)
(74) Vertreter: Manitz Finsterwald Patent- und Rechtsanwaltspartnerschaft mbB

(56) Entgegenhaltungen:
- WO-A1-01/83224

## Beschreibung

Die Erfindung betrifft einen Etikettendrucker zum Bedrucken von auf einem Trägerband aufgebrachten, insbesondere auf Rolle gewickelten Etiketten.

Etikettendrucker werden zur Kennzeichnung von Waren im produzierenden Gewerbe und in der Logistik sowie in der lebensmittelverarbeitenden Industrie, insbesondere als Teil eines Systems zur Gewichts- und Preisauszeichnung, eingesetzt. Üblicherweise sind die Etiketten dabei auf einem Trägerband aufgebracht und liegen in Form einer Etikettenrolle vor. Im Betrieb des Etikettendruckers werden die Etiketten dann mittels einer Trägerband-Zugwalze an einem Druckkopf vorbeigeführt und bedruckt. Danach werden die Etiketten von dem Trägerband abgelöst und auf die Waren appliziert, und das rücklaufende Trägerband kann aufgewickelt werden. Zu dem Druckkopf ist ein Gegenelement vorgesehen, das dazu ausgebildet ist, das Trägerband mit den Etiketten in Anlage an dem Druckkopf zu halten. Dabei sind verschiedene Arten von Etikettendruckern bekannt. Beispielsweise kann ein Etikettendrucker mit einem Thermotransfer-Druckkopf oder einem Thermodirekt-Druckkopf ausgestattet sein. Darüber hinaus kann ein Etikettendrucker mit einem Gegenelement in Form einer Druckwalze oder in Form einer bloßen Gleitplatte ausgestattet sein. Bei Anschaffung eines neuen Etikettendruckers muss daher vorab entschieden werden, welche Ausstattung der Etikettendrucker besitzen soll. Wird dann eine andere Ausstattung gebraucht, muss ein weiterer Etikettendrucker mit der anderen Ausstattung angeschafft oder der vorhandene Etikettendrucker - sofern möglich - aufwändig umgebaut werden. WO-A1-01/83224 beschreibt eine Druckvorrichtung.

Der Erfindung liegt die Aufgabe zugrunde, eine Möglichkeit anzugeben, kostengünstig und gleichzeitig ohne aufwändige Umbauten Etiketten mit anderer Ausstattung zu bedrucken.

Diese Aufgabe wird durch einen Etikettendrucker mit den Merkmalen des Anspruchs 1 gelöst, und insbesondere dadurch, dass der Etikettendrucker folgendes umfasst: eine erste Aufnahme für eine Druckkopfeinheit mit einem Druckkopf, wenigstens zwei voneinander verschiedene, jeweils als austauschbares Modul ausgebildete Druckkopfeinheiten jeweils mit einem Druckkopf, wobei in einem zusammengesetzten Zustand wahlweise eine der beiden Druckkopfeinheiten von der ersten Aufnahme aufgenommen ist, eine zweite Aufnahme für eine Führungseinheit für das Trägerband mit einem Gegenelement zu dem Druckkopf, das dazu ausgebildet ist, das Trägerband mit den Etiketten in Anlage an dem Druckkopf zu halten, und wenigstens zwei voneinander verschiedene, jeweils als austauschbares Modul ausgebildete Führungseinheiten für das Trägerband jeweils mit einem Gegenelement zu dem Druckkopf, das dazu ausgebildet ist, das Trägerband mit den Etiketten in Anlage an dem Druckkopf zu halten, wobei in dem zusammengesetzten Zustand wahlweise eine der beiden Führungseinheiten für das Trägerband von der zweiten Aufnahme aufgenommen ist.

Die Erfindung sieht also vor, dass der jeweilige Druckkopf Teil einer jeweiligen, als austauschbares Modul ausgebildeten Druckkopfeinheit und das jeweilige Gegenelement Teil einer jeweiligen, als austauschbares Modul ausgebildeten Führungseinheit ist. Die jeweilige, als Modul ausgebildete Druckkopfeinheit bildet eine geschlossene Funktionseinheit und die jeweilige, als Modul ausgebildete Führungseinheit bildet eine geschlossen Funktionseinheit. Die jeweilige Druckkopfeinheit kann als Ganzes von dem Etikettendrucker abgenommen und gegen eine Drucckopfeinheit anderer Art schnell und unkompliziert austauscht werden. Ebenso kann die jeweilige Führungseinheit als Ganzes von dem Etikettendrucker abgenommen und gegen eine Führungseinheit anderer Art schnell und unkompliziert austauscht werden.

Somit ist auch für ein Bedrucken mit unterschiedlicher Ausstattung nur ein einziger Etikettendrucker erforderlich, und auch ein aufwändiger Umbau ist nicht erforderlich. Voraussetzung hierfür ist lediglich, dass wenigstens zwei voneinander verschiedene Druckkopfeinheiten und wenigstens zwei voneinander verschiedene Führungseinheiten vorhanden sind, von denen dann die aktuell benötigte Drucckopfeinheit bzw. die aktuell benötigte Führungseinheit von der ersten bzw. zweiten Aufnahme aufgenommen wird. Der Etikettendrucker ist dadurch flexibel einsetzbar, was dem Anwender einen großen Vorteil verschafft. Etikettendrucker, bei denen die Druckkopfeinheiten und die Führungseinheiten nicht als schnell austauschbare Module ausgebildet sind, können nicht flexibel eingesetzt werden, so dass sie früher oder später in der falschen Ausstattung konfiguriert sind.

Insbesondere kann eine Druckkopfeinheit mit einem Thermotransfer-Druckkopf gegen eine Druckkopfeinheit mit einem Thermodirekt-Druckkopf ausgetauscht werden, oder umgekehrt, und eine Führungseinheit mit einem als Druckwalze ausgebildeten Gegenelement kann gegen eine Führungseinheit mit einem als Gleitplatte ausgebildeten Gegenelement ausgetauscht werden, oder umgekehrt.

Die erste und die zweite Aufnahme können jeweils einen horizontal angeordneten, insbesondere als Rundstab ausgebildeten Haltedorn, umfassen, der jeweils mit einem Ende an einem Träger, insbesondere einer Trägerplatte, befestigt ist und dessen anderes Ende freitragend von dem Träger absteht, wobei die beiden Druckkopfeinheiten jeweils von dem freitragenden Ende her auf die erste Aufnahme aufschiebbar sind und wobei die beiden Führungseinheiten für das Trägerband jeweils von dem freitragenden Ende her auf die zweite Aufnahme aufschiebbar sind. Eine derartig ausgebildete Aufnahme ermöglicht ein besonders schnelles und besonders unkompliziertes Austauschen der Druckkopfeinheit bzw. der Führungseinheit.

Die jeweilige Druckkopfeinheit kann mittels einer per Hand lösbaren Schraube, insbesondere Rändelschraube, an der ersten Aufnahme befestigt sein und/oder die jeweilige Führungseinheit kann mittels einer per Hand lösbaren Schraube, insbesondere Rändelschraube, an der zweiten Aufnahme befestigt sein. Mittels per Hand lösbaren Schrauben können die Druckkopfeinheit und die Führungseinheit besonders einfach an der jeweiligen Aufnahme gehalten werden.

Es ist bevorzugt, wenn die jeweilige Druckkopfeinheit unabhängig davon, ob bereits die jeweilige Führungseinheit für das Trägerband von der zweiten Aufnahme aufgenommen ist, von der ersten Aufnahme aufnehmbar ist, und wenn die jeweilige Führungseinheit für das Trägerband unabhängig davon, ob bereits die jeweilige Druckkopfeinheit von der ersten Aufnahme aufgenommen ist, von der zweiten Aufnahme aufnehmbar ist. Ein unbehinderter Austausch der jeweiligen Druckkopfeinheit und/oder der jeweiligen Führungseinheit ist damit jederzeit gewährleistet.

Nach einer Ausgestaltung der Erfindung ist vorgesehen, dass im zusammengesetzten Zustand die jeweilige Druckkopfeinheit um die erste Aufnahme zwischen einer Betriebsstellung und einer Einsetzstellung für ein Thermotransferband verschwenkbar gelagert ist und/oder dass im zusammengesetzten Zustand die jeweilige Führungseinheit für das Trägerband um die zweite Aufnahme zwischen einer Betriebsstellung und einer Einsetzstellung für das Trägerband verschwenkbar gelagert ist. Auf diese Weise kann das Einsetzen des Thermotransferbands und/oder des Trägerbands erleichtert werden.

Die Erfindung betrifft ferner einen Satz von voneinander verschiedenen Zubehörteilen für einen selben Etikettendrucker, der zum Bedrucken von auf einem Trägerband aufgebrachten, insbesondere auf Rolle gewickelten Etiketten ausgebildet ist, wobei die Zubehörteile wenigstens zwei Druckkopfeinheiten jeweils mit einem Druckkopf und/oder wenigstens zwei Führungseinheiten für das Trägerband jeweils mit einem Gegenelement zu einem Druckkopf, das dazu ausgebildet ist, das Trägerband mit den Etiketten in Anlage an dem Druckkopf zu halten, umfassen, wobei die Zubehörteile jeweils als austauschbares Modul ausgebildet sind. Hierdurch können dieselben Vorteile erreicht werden, wie durch den vorstehend beschriebenen, erfindungsgemäßen Etikettendrucker.

Es kann vorgesehen sein, dass die Druckkopfeinheiten eine erste und eine zweite Druckkopfeinheit umfassen, wobei die Druckköpfe der ersten und der zweiten Druckkopfeinheit voneinander verschieden sind und/oder dass die Führungseinheiten eine erste und eine zweite Führungseinheit umfassen, wobei die Gegenelemente der ersten und der zweiten Führungseinheit voneinander verschieden sind. Dadurch können mit dem Etikettendrucker verschiedene Druckkonstellationen realisiert werden. Insbesondere kann sowohl die erste Druckkopfeinheit als auch die zweite Druckkopfeinheit mit jeder der beiden Führungseinheiten kombiniert werden, so dass dann insgesamt vier verschiedene Druckkonstellationen möglich sind.

Der Druckkopf der ersten Druckkopfeinheit kann als Thermotransfer-Druckkopf und der Druckkopf der zweiten Druckkopfeinheit kann als Thermodirekt-Druckkopf ausgebildet sein. Ein Thermotransfer-Druckkopf kann Etiketten sowohl im Thermotransferdruck-Verfahren (unter zusätzlicher Verwendung eines Thermotransferbands) als auch im Thermodirektdruck-Verfahren bedrucken. Beim Thermotransferdruck nehmen die Etiketten die Farbe, insbesondere Schwarz, des Thermotransfer- bzw. Farbbands auf, so dass die Drucke besonders haltbar sind. Bei Thermodirektdruckern hingegen werden keine Farbbänder benötigt, so dass kostengünstiger und schneller bedruckt werden kann.

Das Gegenelement der ersten Führungseinheit kann als angetriebene Druckwalze und das Gegenelement der zweiten Führungseinheit kann als insbesondere metallische und/oder mit einem Dämpfungselement, insbesondere einem Filz, versehene Gleitplatte ausgebildet sein. Eine Druckwalze ist langlebig und günstig herstellbar. Eine Druckwalze bedingt aufgrund ihres Durchmessers aber einen gewissen Abstand zwischen dem Druckbereich und einer unmittelbar nachgeordneten Spende- oder Abziehkante des Etikettendruckers. Dabei ist es dann möglich, dass bei Ablösung eines vorlaufenden Etiketts an der Spendekante ein nachlaufendes Etikett bereits teilweise durch den Druckbereich hindurchgelaufen ist, so dass ein sogenannter Near-Edge-Druck an der vorderen Etikettenkante ohne weitere Maßnahmen nicht möglich ist. Um dies zu verhindern, muss entweder das Trägerband kurzzeitig reversiert werden, wodurch es zu einem Geschwindigkeitsverlust kommt und dadurch der Durchsatz an bedruckten Etiketten sinkt, oder die Etiketten müssen in einem größeren Abstand zueinander angeordnet werden, was mit höheren Kosten verbunden ist. Ist das Gegenelement als Gleitplatte ausgebildet, kann der Abstand zwischen dem Druckbereich und der Spendekante kleiner sein, so dass ein Near-Edge-Druck möglich ist, ohne dass weitere Maßnahmen getroffen werden müssen. Ein derartiges Gegenelement ist jedoch teuer, und insbesondere mit Dämpfungselement weniger langlebig, so dass es regelmäßig ersetzt werden muss. Das Dämpfungselement kann vorgesehen sein, um Toleranzen der Gleitplatte und/oder des Druckkopfs auszugleichen und/oder eine Beschädigung des Druckkopfs beim Absenken in Richtung der Gleitplatte zu vermeiden. Eine Druckwalze kann im Hinblick hierauf entweder federgelagert sein und/oder aus einem entsprechend nachgiebigen Material, insbesondere Kunststoff, gefertigt sein.

Vorteilhafte Ausgestaltungen der Erfindung sind auch in den Unteransprüchen, der Beschreibung und der Zeichnung beschrieben.

Die Erfindung wird im Folgenden beispielhaft unter Bezugnahme auf die Zeichnungen beschrieben. Es zeigen,
- Fig. 1: einen erfindungsgemäßen Etikettendrucker zum Bedrucken von auf einem Trägerband aufgebrachten Etiketten gemäß einer ersten Ausführungsform mit einer Druckkopfeinheit, einer Führungseinheit für das Trägerband und einem Hochgeschwindigkeitsantrieb, die sich jeweils in einer Betriebsstellung befinden,
- Fig. 2: einen erfindungsgemäßen Etikettendrucker gemäß einer zweiten Ausführungsform mit einer alternativen Führungseinheit, die sich in einer Einsetzstellung für das Trägerband befindet,
- Fig. 3: den Etikettendrucker aus Fig. 2, wobei sich zusätzlich die Druckkopfeinheit in einer Einsetzstellung für ein Thermotransferband befindet,
- Fig. 4: den Etikettendrucker aus Fig. 1, wobei sich der Hochgeschwindigkeitsantrieb in einer Einsetzstellung für das Trägerband befindet,
- Fig. 5: den Etikettendrucker aus Fig. 1, wobei sowohl die Druckkopfeinheit als auch die Führungseinheit abgenommen sind,
- Fig. 6: eine rückwärtige Ansicht des Etikettendruckers aus Fig. 1 auf den Antrieb des Etikettendruckers,
- Fig. 7: die Führungseinheit aus Fig. 1 in Einzeldarstellung mit zwei Andruckrollen, einer zugehörigen Halterung und einer Federeinrichtung,
- Fig. 8: die alternative Führungseinheit aus Fig. 2 in Einzeldarstellung mit zwei Andruckrollen, einer zugehörigen Halterung und einer Federeinrichtung,
- Fig. 9: die zwei Andruckrollen und die Federeinrichtung aus Fig. 7 oder 8,
- Fig. 10: einen Haltearm der Halterung aus Fig. 7 oder 8,
- Fig. 11: die Druckkopfeinheit aus Fig. 1 oder 2 in Einzeldarstellung, und
- Fig. 12: eine alternative Druckkopfeinheit.

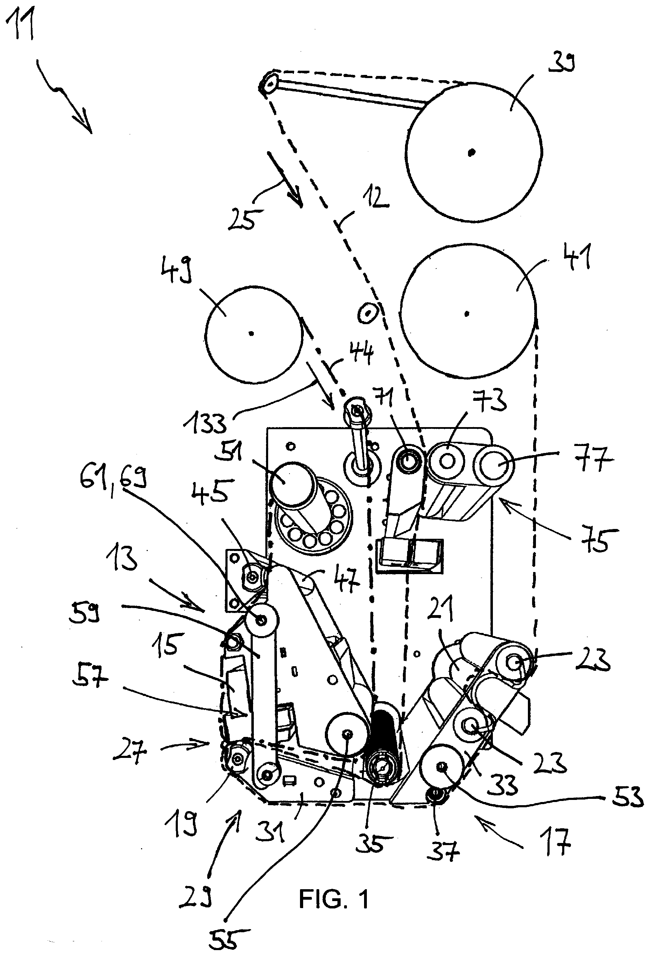

Der in Fig. 1 dargestellte Etikettendrucker 11 zum Bedrucken von auf einem Trägerband 12 aufgebrachten, auf eine Rolle gewickelten Etiketten umfasst eine Druckkopfeinheit 13 mit einem Druckkopf 15 sowie eine Führungseinheit 17 für das Trägerband 12, das ein Gegenelement 19 zu dem Druckkopf 15 aufweist. Das Trägerband 12 mit den Etiketten wird im Betrieb des Etikettendruckers 11 zwischen dem Druckkopf 15 und dem Gegenelement 19 hindurchgeführt. Das Gegenelement 19 ist dazu vorgesehen, das Trägerband 12 mit den Etiketten in der Anlage an dem Druckkopf 15 zu halten, um das Bedrucken der Etiketten zu gewährleisten.

Darüber hinaus umfasst der Etikettendrucker 11 einen Antriebsmechanismus für das Trägerband 12 mit einer angetriebenen, ortsfest gelagerten Trägerband-Zugwalze 21, der zwei nicht angetriebene Trägerband-Andruckrollen 23 zugeordnet sind, die jeweils ein Teil der Führungseinheit 17 sind. Die Trägerband-Zugwalze 21 und die beiden Trägerband-Andruckrollen 23 sind dazu vorgesehen, das Trägerband 12 entlang einer vorgegebenen Trägerband-Transportbahn zu transportieren. Hierzu wird das Trägerband 12 zwischen der Trägerband-Zugwalze 21 und der jeweiligen Trägerband-Andruckrolle 23 hindurchgeführt. Die beiden Trägerband-Andruckrollen 23 drücken dabei das Trägerband 12 jeweils gegen die Trägerband-Zugwalze 21, so dass eine ausreichende Anpress- und Vortriebskraft auf das Trägerband 12 erzeugt wird. Das Trägerband 12 wird von einer Etikettenrolle 39 abgewickelt und von einer angetriebenen, ortsfest gelagerten Trägerband-Aufwickelwalze 41 aufgewickelt.

Konkret ist zwischen den beiden Trägerband-Andruckrollen 23 ein Zwischenraum ausgebildet, in den die Trägerband-Zugwalze 21 eingreift, so dass die Trägerband-Transportbahn zwischen der Trägerband-Zugwalze 21 und der jeweiligen Trägerband-Andruckrolle 23 jeweils S-förmig verläuft, so dass in diesem Bereich insgesamt ein Doppel-S-förmiger Verlauf der Trägerband-Transportbahn resultiert. Die Trägerband-Zugwalze 21 und den beiden Trägerband-Andruckrollen 23 sind dabei in der Transportrichtung 25 des Trägerbands 12 gesehen hinter dem Drucckopf 15 und dem Gegenelement 19 und hinter einer dem Druckkopf 15 und dem Gegenelement 19 unmittelbar nachgeordneten Spendekante 27 angeordnet.

Die Führungseinheit 17 umfasst ein Winkelelement 29, das einen horizontal orientierten ersten Winkelarm 31 und einen schräg nach oben orientierten zweiten Winkelarm 33 aufweist. Dabei ist das Gegenelement 19 an dem ersten Winkelarm 31 angeordnet, und die beiden Trägerband-Andruckrollen 23 sind an dem zweiten Winkelarm 33 angeordnet. Der von den beiden Winkelarmen 31, 33 eingeschlossene Winkel besitzt einen Wert von ca. 130°. Zur Anpassung der Trägerband-Transportbahn an die winkelige Ausbildung des Winkelelements 29 umfasst die Führungseinheit 17 ferner eine Umlenkrolle 35, die innenliegend, am Scheitelpunkt des Winkelelements 29 angeordnet ist, und eine weitere Umlenkrolle 37, die außenliegend, am Scheitelpunkt des Winkelelements 29 angeordnet ist.

Der in Fig. 1 dargestellte Etikettendrucker 11 ist als ein Thermotransfer-Etikettendrucker ausgebildet, d.h. bei dem Druckkopf 15 handelt es sich um einen Thermotransfer-Druckkopf. Der Etikettendrucker 11 besitzt somit auch einen Antriebsmechanismus für ein auf eine Rolle gewickeltes Thermotransferband 44. Der Antriebsmechanismus für das Thermotransferband 44 umfasst eine angetriebene, ortsfest gelagerte Thermotransferband-Zugwalze 45, der eine nicht angetriebene Thermotransferband-Andruckrolle 47 zugeordnet ist, die ein Teil der Druckkopfeinheit 13 ist. Die Thermotransferband-Andruckrolle 47 drückt das Thermotransferband 44 gegen die Thermotransferband-Zugwalze 45, so dass eine ausreichende Anpress- und Vortriebskraft auf das Thermotransferband 44 erzeugt wird. Im Betrieb des Etikettendruckers 11 wird das Thermotransferband 44 entlang einer vorgegebenen Thermotransferband-Transportbahn transportiert und ist dabei zwischen dem Druckkopf 15 und dem Gegenelement 19 einerseits und zwischen der Thermotransferband-Zugwalze 45 und der Thermotransferband-Andruckrolle 47 andererseits hindurchgeführt. Das Thermotransferband 44 wird von einer Thermotransferbandrolle 49 abgewickelt und von einer angetriebenen, ortsfest gelagerten Thermotransferband-Aufwickelwalze 51 aufgewickelt. Die Thermotransferband-Zugwalze 45 und die Thermotransferband-Andruckrolle 47 sind in Transportrichtung 133 des Thermotransferbands 44 gesehen nach dem Druckkopf 15 und dem Gegenelement 19 angeordnet.

Wie aus Fig. 1 erkennbar ist, ist in der in Fig. 1 gezeigten Betriebsstellung der Führungseinheit 17 ein Wechsel der Etikettenrolle 39 zeitaufwändig, da das Trägerband 12 der neuen Etikettenrolle umständlich zwischen den Druckkopf 15 und das Gegenelement 19 einerseits und zwischen die Trägerband-Zugwalze 21 und die jeweilige Trägerband-Andruckrolle 23 andererseits eingefädelt werden muss, da der Abstand zwischen dem Druckkopf 15 und dem Gegenelement 19 einerseits und zwischen der Trägerband-Zugwalze 21 und jeder der beiden Trägerband-Andruckrollen 23 andererseits zumindest nicht ausreichend groß ist.

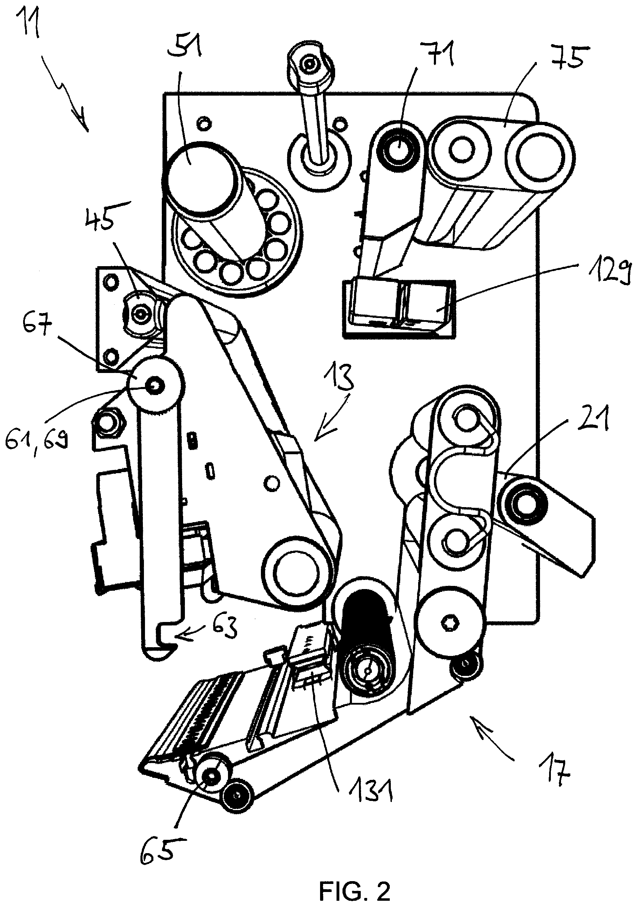

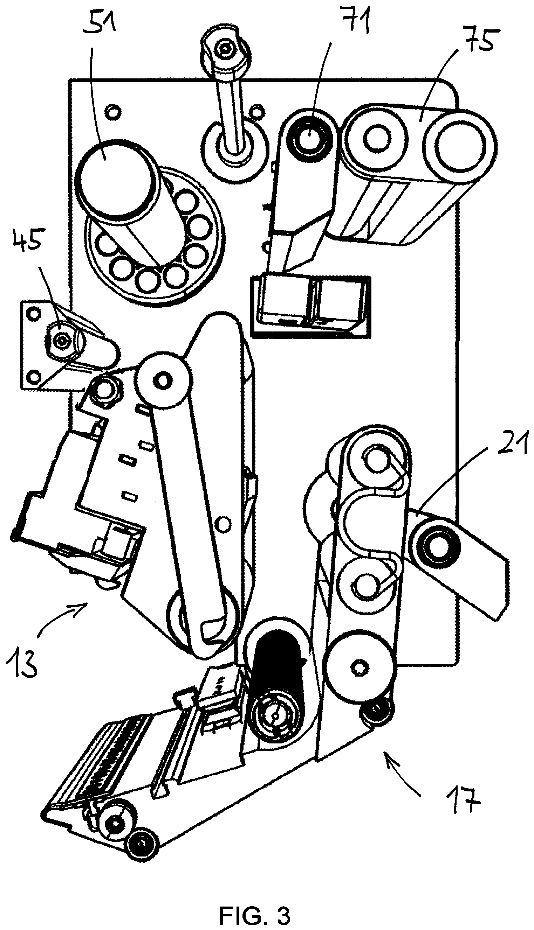

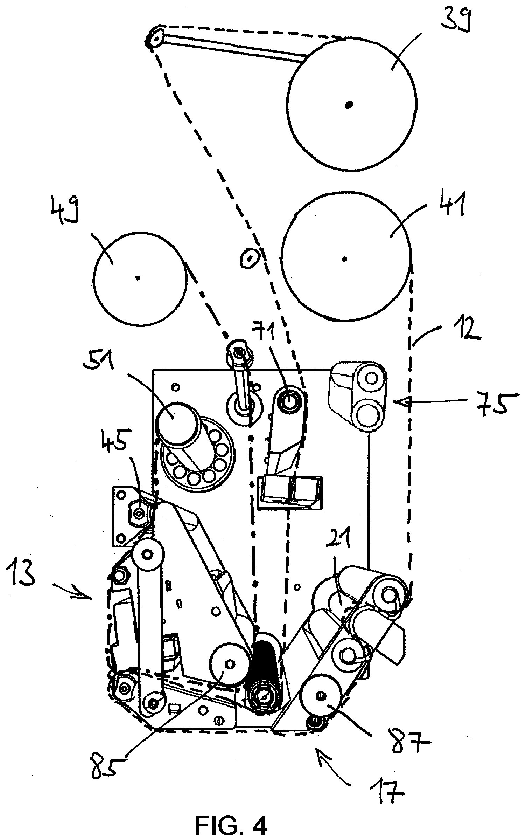

Deshalb kann die Führungseinheit 17 aus ihrer in den Fig. 1 und 4 gezeigten Betriebsstellung gegen den Uhrzeigersinn in ihre in den Fig. 2 und 3 gezeigte Einsetzstellung für das Trägerband 12 verschwenkt werden. Hierzu ist die Führungseinheit 17, insbesondere das Winkelelement 29, um eine Schwenkachse 53 verschwenkbar gelagert. In der Einsetzstellung der Führungseinheit 17 ist das Gegenelement 19 von dem Druckkopf 15 weggeschwenkt und die beiden Trägerband-Andruckrollen 23 sind von der Trägerband-Zugwalze 21 weggeschwenkt, so dass sich der Abstand zwischen dem Gegenelement 19 und dem Druckkopf 15 und zwischen den beiden Trägerband-Andruckrollen 23 und der Trägerband-Zugwalze 21 vergrößert. Insbesondere ist die Trägerband-Zugwalze 21 in der Einsetzstellung der Führungseinheit 17 - relativ gesehen - vollständig aus dem zwischen den beiden Trägerband-Andruckrollen 23 ausgebildeten Zwischenraum zurückgezogen. Das Trägerband 12 der neuen Trägerbandrolle kann dann einfach eingelegt werden.

Gleiches gilt für einen Wechsel der Thermotransferbandrolle 49. Auch dieser Wechsel ist in der in Fig. 1, 2 und 4 gezeigten Betriebsstellung der Druckkopfeinheit 13 zeitaufwändig, da das Thermotransferband 44 der neuen Thermotransferbandrolle umständlich zwischen die Thermotransferband-Zugwalze 45 und die Thermotransferband-Andruckrolle 47 hindurchgefädelt werden muss, da der Abstand zwischen der Thermotransferband-Zugwalze 45 und der Thermotransferband-Andruckrolle 47 zumindest nicht ausreichend groß ist.

Deshalb kann auch die Druckkopfeinheit 13 aus ihrer in den Fig. 1, 2 und 4 gezeigten Betriebsstellung im Uhrzeigersinn in ihre in Fig. 3 gezeigte Einsetzstellung für das Thermotransferband 44 verschwenkt werden. Hierzu ist die Druckkopfeinheit 13 um eine Druckkopfeinheit-Schwenkachse 55 verschwenkbar gelagert. In der Einsetzstellung der Druckkopfeinheit 13 ist die Thermotransferband-Andruckrolle 47 von der Thermotransferband-Zugwalze 45 weggeschwenkt, so dass sich der Abstand zwischen der Thermotransferband-Andruckrolle 47 und der Thermotransferband-Zugwalze 45 vergrößert. Das Thermotransferband 44 der neuen Thermotransferbandrolle kann dann einfach eingelegt werden.

Das Einsetzen des Thermotransferbands 44 im Bereich des Druckkopfs 15 und des Gegenelements 19 bereitet dabei keine Schwierigkeiten, weil der Druckkopf 15 und das Gegenelement 19 durch das Verschwenken der Führungseinheit 17 bereits einen ausreichend großen Abstand voneinander einnehmen. Grundsätzlich kann dies aber auch anders vorgesehen sein. Um das Thermotransferband 44 im Bereich des Druckkopfs 15 und des Gegenelements 19 dann einfach einsetzen zu können, sollte das Verschwenken der Druckkopfeinheit 13 dann bevorzugt derart erfolgen, dass der Druckkopf 15 von dem Gegenelement 19 weggeschwenkt wird, wie es bei den in den Figuren gezeigten Ausführungsformen auch der Fall ist.

Darüber hinaus ist eine Halteeinrichtung 57 vorgesehen, die die Führungseinheit 17 entweder in der Betriebsstellung hält, d.h. gegen ein Verschwenken in die Einsetzstellung sichert, oder für ein Verschwenken in die Einsetzstellung freigibt. Die Halteeinrichtung 57 umfasst einen an der Druckkopfeinheit 13 gelagerten Hebel 59, der um eine Achse 61 zwischen einer Haltestellung und einer Freigabestellung drehbar ist. In der Haltestellung wird die Führungseinheit 17 in der Betriebsstellung gesichert, in der Freigabestellung, die der Hebel 59 durch ein Verschwenken im Uhrzeigersinn erreicht, wird die Führungseinheit 17 für ein Verschwenken in die Einsetzstellung freigegeben.

Der Hebel 59 weist an seinem freien Ende eine Ausnehmung 63 auf und die Führungseinheit 17 weist einen abstehenden pilzkopfförmigen Stift 65 auf (vgl. Fig. 2). Befindet sich die Führungseinheit 17 in ihrer Betriebsstellung und der Hebel 59 in seiner Haltestellung, hakt der Hebel 59 mit der Ausnehmung 63 an dem Stift 65 der Führungseinheit 17 ein. Dadurch kann die Führungseinheit 17 in ihrer Betriebsstellung gehalten werden. Ein Verschwenken in ihre Einsetzstellung ist dann nicht möglich. Um den Hebel 59 in seiner Haltestellung festzusetzen, ist eine Rändelschraube 67 vorgesehen (vgl. Fig. 2), die von Hand betätigbar ist. Die Achse der Rändelschraube 67 fällt dabei mit der Achse 61 des Hebels 59 zusammen.

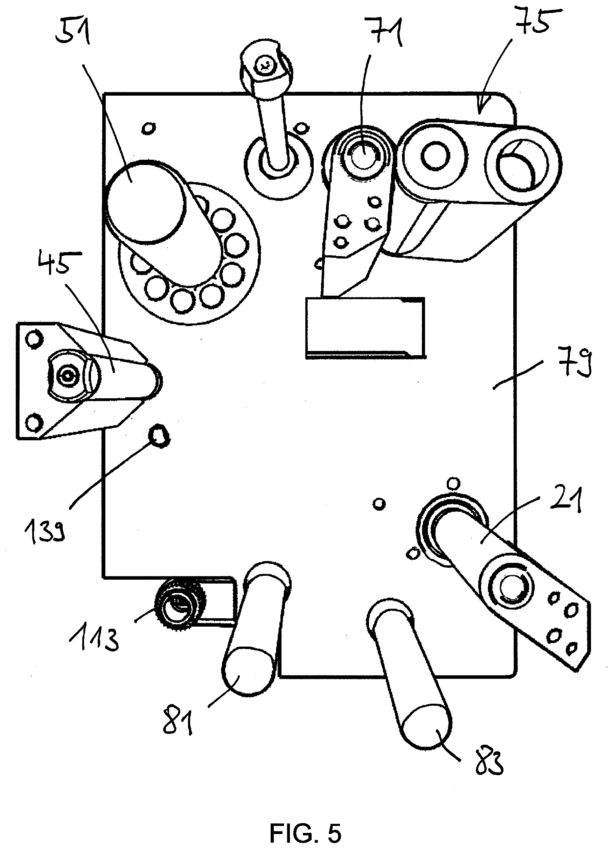

Darüber hinaus ist eine Festsetzeinrichtung in Form eines von Hand betätigbaren, die Achse 61 des Hebels 59 bildenden Blockierstifts 69 vorgesehen (vgl. Fig. 2), durch den die Druckkopfeinheit 13 in ihrer Betriebsstellung festsetzbar ist. Somit ist auch die Druckkopfeinheit 13 durch eine technische Maßnahme in ihrer Betriebsstellung sicherbar. Der Blockierstift 69 ist entlang seiner Längsachse zwischen einer Sperrstellung und einer Entsperrstellung verstellbar. In der Sperrstellung greift der Blockierstift 69 in eine in einem hochkant aufgestellten Träger 79 des Etikettendruckers 11 ausgebildete Sperröffnung 139 ein (vgl. Fig. 5), so dass ein Verschwenken der Druckkopfeinheit 13 unterbunden ist. Wird der Blockierstift 69 hingegen entlang seiner Längsachse entgegen der Vorspannung einer nicht dargestellten Feder nach vorne in seine Entsperrstellung verstellt, insbesondere gezogen, wird die Druckkopfeinheit 13 freigegeben. Die Druckkopfeinheit 13 kann dann in ihre Einsetzstellung verschwenkt werden.

Ferner umfasst der Antriebsmechanismus für das Trägerband 12 eine weitere angetriebene, ortsfest gelagerte Trägerband-Zugwalze 71 und eine der weiteren Trägerband-Zugwalze 71 zugeordnete, nicht angetriebene weitere Trägerband-Andruckrolle 73, die in Transportrichtung des Trägerbands 12 gesehen vor dem Druckkopf 15 und dem Gegenelement 19 angeordnet sind. Die weitere Trägerband-Andruckrolle 73 drückt dabei das Trägerband 12 gegen die weitere Trägerband-Zugwalze 71, so dass eine Anpress- und Vortriebskraft auf das Trägerband 44 erzeugt wird.

Dadurch, dass die weitere Trägerband-Zugwalze 71 und die weitere Trägerband-Andruckrolle 73 dem Druckkopf 15 und dem Gegenelement 19 vorgeschaltet sind, kann das Trägerband 12 mit einer höheren Geschwindigkeit entlang der Trägerband-Transportbahn transportiert werden, als dies ohne die weitere Trägerband-Zugwalze 71 und ohne die weitere Trägerband-Andruckrolle 73 der Fall wäre. Die weitere Trägerband-Zugwalze 71 und die weitere Trägerband-Andruckrolle 73 liegen nämlich näher an der Etikettenrolle 39 als die Trägerband-Zugwalze 21 und die Trägerband-Andruckrollen 23 und können das Trägerband 12 daher leichter von der Etikettenrolle 39 abziehen. Insbesondere muss beim Abziehen keine Kraft für die scharfe Umlenkung des Trägerbands 12 an der Spendekante 27 aufgewandt werden. Der Etiketten-Durchsatz kann dadurch erhöht werden.

Um das Trägerband 12 bei einem Wechsel der Etikettenrolle 39 nicht umständlich zwischen der weiteren Trägerband-Zugwalze 71 und der weiteren Trägerband-Andruckrolle 73 einfädeln zu müssen, ist die weitere Trägerband-Andruckrolle 73 ein Teil eines Schwenkelements 75, das um eine weitere Schwenkachse 77 zwischen einer Betriebsstellung (vgl. die Fig. 1 bis 3) und einer Einsetzstellung für das Trägerband 12 (vgl. Fig. 4) verschwenkbar gelagert ist. Analog zu der vorstehend im Hinblick auf die verschwenkbare Führungseinheit 17 sowie die Trägerband-Zugwalze 21 und die Trägerband-Andruckrollen 23 beschriebenen Situation ist in der Betriebsstellung des Schwenkelements 75 das Trägerband 12 zwischen der weiteren Trägerband-Zugwalze 71 und der weiteren Trägerband-Andruckrolle 73 hindurchführbar und entlang der Trägerband-Transportbahn transportierbar und ist in der Einsetzstellung für das Trägerband 12 die weitere Trägerband-Andruckrolle 73 von der weiteren Trägerband-Zugwalze 71 weggeschwenkt.

Das Schwenkelement 75 wird zum "Öffnen" der Trägerband-Transportbahn aus der in den Fig. 1 bis 3 gezeigten Betriebsstellung nach oben und zum "Schließen" der Trägerband-Transportbahn aus der in Fig. 4 gezeigten Einsetzstellung nach unten verschwenkt. Das Trägerband 12 wird durch die im Uhrzeigersinn drehende weitere Trägerband-Zugwalze 71 nach unten transportiert, wie es in Fig. 1 anhand der Transportrichtung 25 des Trägerbands 12 dargestellt ist. Der Drehsinn der Verschwenkbewegung des Schwenkelements 75 aus der Einsetzstellung in die Betriebsstellung ist daher dem Drehsinn der weiteren Trägerband-Zugwalze 71 entgegengesetzt. Dies bedeutet letztlich, dass im Betrieb des Etikettendruckers 11 das Trägerband 12 das Schwenkelement 75 in Richtung der Betriebsstellung zieht und somit einem Verschwenken in Richtung der Einsetzstellung entgegenwirkt.

Das Schwenkelement 75 mit der weiteren Trägerband-Andruckrolle 73 kann von dem Etikettendrucker 11 abnehmbar sein, und die weitere Trägerband-Zugwalze 71 kann von ihrem Motor mechanisch entkoppelt und als bloße Umlenkrolle verwendbar sein. Der Etikettendrucker 11 kann dann in eine Variante ohne den weiteren Antrieb umgerüstet werden. Alternativ kann die Variante ohne den weiteren Antrieb auch bereits von Werk aus angeboten werden. In beiden Fällen ist es bevorzugt, wenn der Etikettendrucker 11 einen ersten Betriebsmodus und einen zweiten Betriebsmodus aufweist. Der erste Betriebsmodus wird gewählt, wenn der weitere Antrieb, d.h. die weitere Trägerband-Zugwalze 71 und die weitere Trägerband-Andruckrolle 73, vorhanden ist bzw. sind. Es handelt sich hierbei dann um einen Hochgeschwindigkeitsmodus. Der zweite Betriebsmodus wird gewählt, wenn der weitere Antrieb fehlt, d.h. wenn die weitere Trägerband-Andruckrolle 73 abgenommen ist oder von vorne herein fehlt und die weitere Trägerband-Zugwalze 71 von einem zugehörigen Motor mechanisch abgekoppelt ist oder dieser von vorne herein fehlt. Es handelt sich hierbei dann um einen Normalgeschwindigkeitsmodus.

Darüber hinaus kann der Etikettendrucker 11 einen Betriebsmodus aufweisen, in dem der Druckkopf 15 alternierend zwischen einer auf das Trägerband 12 abgesenkten Position und einer von dem Trägerband 12 abgehobenen Position verstellt wird. In der abgesenkten Position kann ein Etikett in dem jeweiligen Druckbereich bedruckt werden, und die abgehobene Position wird zwischen dem Bedrucken zweier aufeinander folgender Etiketten in den jeweiligen Druckbereichen eingenommen. In den Bereichen, in denen das jeweilige Etikett nicht bedruckt wird, kann der Druckkopf 15 die abgehobene Position einnehmen. Dabei werden in der abgehobenen Position des Druckkopfs 15 die Trägerband-Zugwalze 21, die weitere Trägerband-Zugwalze 71 und die Trägerband-Aufwickelwalze 41 mit einer höheren Drehgeschwindigkeit betrieben werden als bei abgesenkter Position des Druckkopfs 15. Hierzu muss das Trägerband 12 zwischen dem Bedrucken aufeinander folgender Druckbereiche alternierend abgebremst und beschleunigt werden. Dies kann insbesondere dann sinnvoll sein, wenn Schmucketiketten verwendet werden, die über große Bereiche hinweg nicht bedruckt werden. Durch das Vorsehen der weiteren Trägerband-Zugwalze 71 und der weiteren Trägerband-Andruckrolle 73 kann das Trägerband 12 stärker als sonst möglich beschleunigt werden. Das Abheben des Druckkopfs 15 ist insbesondere dann möglich, wenn als Gegenelement 19 eine wie nachstehend erläuterte Gleitplatte 19" (vgl. die Fig. 2, 3 und 8) verwendet wird.

Die Druckkopfeinheit 13 und die Führungseinheit 17 sind jeweils als austauschbares Modul ausgebildet und können jeweils von dem Etikettendrucker 11 abgenommen werden, wie es in Fig. 5 dargestellt ist. Hierzu stehen von der Trägerplatte 79 eine erste Aufnahme 81 für die Druckkopfeinheit 13 und eine zweite Aufnahme 83 für die Führungseinheit 17 ab. Die beiden Aufnahmen 81, 83 sind jeweils als horizontal orientierter Haltedorn in Form eines Rundstabs ausgebildet. Mit dem jeweiligen einen Ende sind die beiden Aufnahmen 81, 83 an der Trägerplatte 79 befestigt, und von dem jeweiligen anderen, freitragenden Ende her können die Druckkopfeinheit 13 bzw. die Führungseinheit 17 auf die Aufnahmen 81, 83 aufgeschoben werden.

Die Druckkopfeinheit 13 kann dabei unabhängig davon, ob die Führungseinheit 17 von der zweiten Aufnahme 83 aufgenommen oder davon abgenommen ist, von der ersten Aufnahme 81 aufgenommen werden, und umgekehrt, d.h. die Führungseinheit 17 kann unabhängig davon, ob die Druckkopfeinheit 13 von der ersten Aufnahme 81 aufgenommen oder abgenommen ist, von der zweiten Aufnahme 83 aufgenommen werden. Um die Druckkopfeinheit 13 bzw. die Führungseinheit 17 an der jeweiligen Aufnahme 81, 83 zu befestigen, ist jeweils eine Rändelschraube 85, 87 vorgesehen (vgl. Fig. 4), die per Hand lösbar ist, so dass die Druckkopfeinheit 13 und die Führungseinheit 17 schnell und unkompliziert befestigbar und abnehmbar sind.

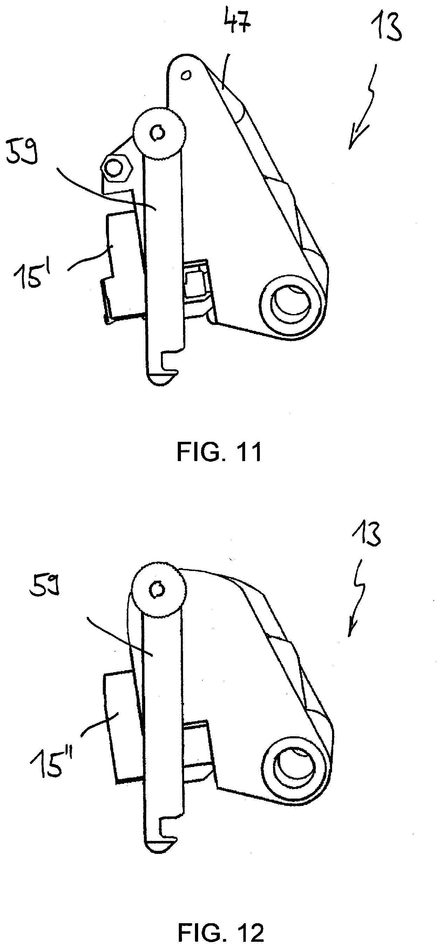

Für den Etikettendrucker 11 stehen zwei voneinander verschiedene Druckkopfeinheiten 13 und zwei voneinander verschiedene Führungseinheiten 17 zur Verfügung, wobei der Etikettendrucker 11, insbesondere die beiden Aufnahmen 81, 83, im zusammengesetzten und betriebsfähigen Zustand eine der beiden Druckkopfeinheiten 13 und eine der beiden Führungseinheiten 17 aufnimmt bzw. aufnehmen. Die erste der beiden Druckkopfeinheiten 13 besitzt einen Druckkopf 15, der als Thermotransfer-Druckkopf 15' ausgebildet ist, wie er in den Fig. 1 bis 4 und 11 gezeigt ist. Die zweite der beiden Druckkopfeinheiten 13 besitzt einen Druckkopf 15, der als Thermodirekt-Druckkopf 15" ausgebildet ist, wie er in Fig. 12 gezeigt ist. Die Druckkopfeinheit 13 mit dem Thermodirekt-Druckkopf 15" besitzt keine Thermotransferband-Andruckrolle. Die erste der beiden Führungseinheiten 17 besitzt als Gegenelement 19 eine angetriebene Druckwalze 19', wie sie in den Fig. 1, 4 und 7 gezeigt ist. Die zweite der beiden Führungseinheiten 17 besitzt als Gegenelement 19 eine mit einem Dämpfungselement 89 versehene Gleitplatte 19" aus Metall, wie sie bereits vorstehend erwähnt und in den Fig. 2, 3 und 8 gezeigt ist. Das Dämpfungselement 89 ist ein zwischen 0,5 mm und 1 mm dicker Filz, der dazu vorgesehen ist, um etwaige Toleranzen der Gleitplatte19" und des Drucckopfs 15 auszugleichen und eine Beschädigung des Druckkopfs 15 beim Absenken in Richtung der harten Gleitplatte 19" zu vermeiden. Zur Fixierung ist das Dämpfungselement 89 mit einem Kunststoffteil 137 heißverstemmt.

Der Thermotransfer-Druckkopf 15' kann zusammen mit dem Thermotransferband 44 betrieben werden, um im Thermotransferdruck-Verfahren zu drucken. Derartige Drucke sind besonders beständig. Der Thermotransfer-Druckkopf 15' kann grundsätzlich aber auch im Thermodirekt-Verfahren, d.h. ohne Thermotransferband 44, drucken. Der Thermotransfer-Druckkopf 15' ist somit flexibel einsetzbar, aber auch teuer. Der Thermodirekt-Druckkopf 15" kann nur im Thermodirekt-Verfahren drucken und ist daher günstiger. Die Druckwalze 19' ist aufgrund ihres Durchmesser in einem bestimmten Abstand von der Spendekante 27 angeordnet. Daher kann es sein, dass zu dem Zeitpunkt, an dem sich ein vorlaufendes Etikett an der Spendekante 27 von dem Trägerband 12 löst, ein nachlaufendes Etikett bereits teilweise unter dem Druckkopf 15 hindurchgelaufen ist, so dass ein Near-Edge-Druck an der vorderen Etikettenkante ohne weitere Maßnahmen nicht möglich ist. Um dies zu verhindern, muss entweder das Trägerband - unter Geschwindigkeitsverlust - kurzzeitig reversiert werden oder die Etiketten müssen - verbunden mit höheren Kosten - in einem größeren Abstand zueinander angeordnet werden. Dieses Problem, dass der Druckkopf 15 zu weit von der Spendekante 27 beabstandet ist, stellt sich bei der Gleitplatte 19" jedoch nicht, so dass hier Near-Edge-Drucke ohne weiteres möglich sind. Die Gleitplatte 19" mit dem Filz ist jedoch weniger langlebig und damit teurer.

Mit den zwei voneinander verschiedenen Druckkopfeinheiten 13 und den zwei voneinander verschiedenen Führungseinheiten 17 liegt ein Satz von voneinander verschiedenen Zubehörteilen für den Etikettendrucker 11 vor. Somit ist für ein Bedrucken mit unterschiedlicher Ausstattung (Thermotransfer-Druckkopf oder Thermodirekt-Druckkopf, Druckwalze oder Gleitplatte) nur ein einzelner Etikettendrucker 11 erforderlich. Insgesamt sind so vier voneinander verschiedene Konstellationen möglich, die, insbesondere abhängig von den jeweiligen Etikettenart und/oder dem gewünschten Bedruck, wahlweise genutzt werden können. Der Etikettendrucker 11 ist damit flexibel konfigurierbar.

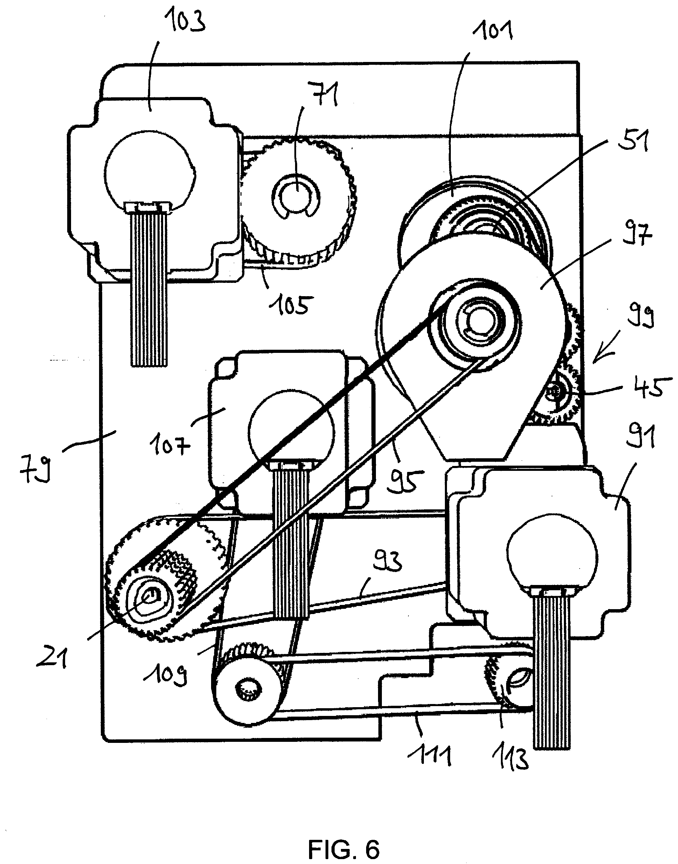

Die Trägerband-Aufwickelwalze 41 wird durch einen nicht gezeigten, eigenen Motor angetrieben. Die Antriebseinrichtung der übrigen Walzen 19', 21, 45, 51, 71 des Etikettendruckers 11 hingegen ist aus der Fig. 6 ersichtlich, die eine Rückansicht der Trägerplatte 79 zeigt.

Die Antriebseinrichtung umfasst zunächst einen ersten Motor 91, der über einen Zahnriemen 93 die Trägerband-Zugwalze 21 antreibt. Der erste Motor 91 treibt mittelbar über die Trägerband-Zugwalze 21, einen weiteren Zahnriemen 95, eine Rutschkupplung 97 und ein Getriebe 99 auch die Thermotransferband-Zugwalze 45 an. Von dem Getriebe 99 wird ferner unter Zwischenschaltung einer weiteren Rutschkupplung 101 auch die Thermotransferband-Aufwickelwalze 51 angetrieben. Bei dem ersten Motor 91 handelt es sich daher um einen gemeinsamen Motor für die Trägerband-Zugwalze 21, die Thermotransferband-Zugwalze 45 und die Thermotransferband-Aufwickelwalze 51, die damit mechanisch miteinander synchronisiert sind.

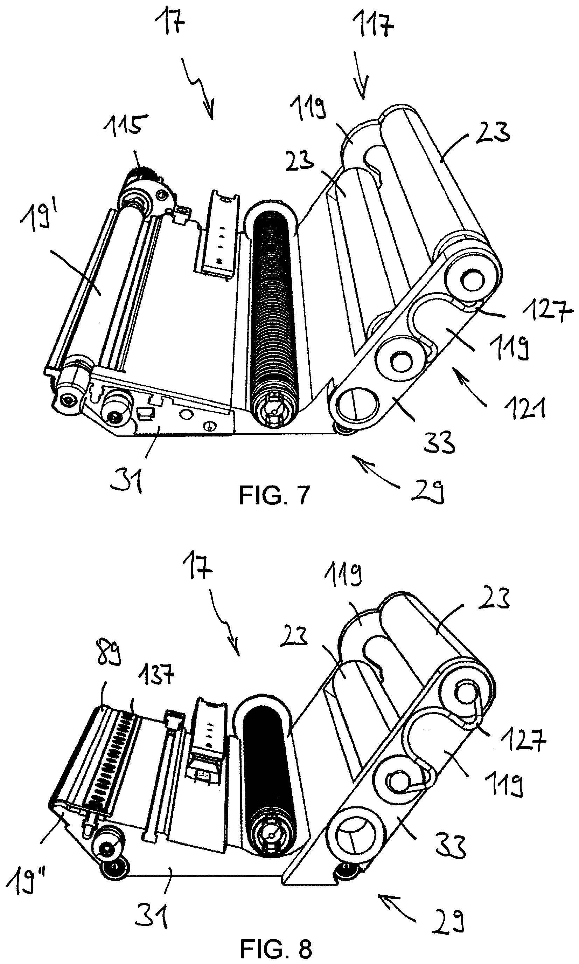

Ferner umfasst die Antriebseinrichtung einen zweiten Motor 103, der über einen weiteren Zahnriemen 105 die weitere Trägerband-Zugwalze 71 antreibt, sofern der weitere Antrieb mit der weiteren Trägerband-Zugwalze 71 und der weiteren Trägerband-Andruckrolle 73 vorhanden ist, und einen dritten Motor 107, der über zwei hintereinander geschaltete weitere Zahnriemen 109, 111 und zwei nachfolgende, ineinander eingreifende Zahnräder 113, 115 die Druckwalze 19' antreibt, sofern die Führungseinheit 17 mit der Druckwalze 19' eingesetzt ist. Das Zahnrad 113 ist an der Rückseite der Trägerplatte 79 angebracht (vgl. die Fig. 5 und 6), und das Zahnrad 115 an der Führungseinheit 17 mit der Druckwalze 19' (vgl. Fig. 7). Ist der weitere Antrieb nicht vorhanden, kann auch der zweite Motor 103 weggelassen werden. Ist die Führungseinheit 17 mit der Gleitplatte 19" eingesetzt, ist kein Zahnrad 115 vorgesehen (vgl. Fig. 8).

Bei dem zweiten Motor 103 handelt es sich um einen eigenen Motor der weiteren Trägerband-Zugwalze 71, und bei dem dritten Motor 107 handelt es sich um einen eigenen Motor der Druckwalze 19'. Grundsätzlich handelt es sich bei einem eigenen Motor um einen Motor, der nur eine Walze antreibt. Somit werden die Trägerband-Zugwalze 21, die weitere Trägerband-Zugwalze 71, die Druckwalze 19' und die Trägerband-Aufwickelwalze 41 von voneinander verschiedenen Motoren 91, 103, 107 angetrieben, die jedoch durch eine entsprechende Regelung elektronisch miteinander synchronisiert sind, um einen aufeinander abgestimmten Betrieb der Trägerband-Zugwalze 21, der weiteren Trägerband-Zugwalze 71, der Druckwalze 19' und der Trägerband-Aufwickelwalze 41 zu gewährleisten.

In Fig. 7 ist die Führungseinheit 17 mit der Druckwalze 19' gezeigt, und in Fig. 8 ist die Führungseinheit 17 mit der Gleitplatte 19" gezeigt. Der in beiden Fällen identische zweite Winkelarm 33 des Winkelelements 29 weist eine Halterung 117 mit zwei gabelförmig angeordneten Haltearme 119 auf, zwischen denen die beiden Trägerband-Andruckrollen 23 jeweils mit ihren beiden axialen Enden linear verschiebbar gelagert sind. In der Betriebsstellung der Führungseinheit 17 ist die Trägerband-Zugwalze 21 zwischen den beiden Trägerband-Andruckrollen 23 angeordnet. Die Trägerband-Andruckrollen 23 sind dabei jeweils senkrecht zu ihrer Rotationsachse, die jeweils parallel zu der Drehachse der Trägerband-Zugwalze 21 verläuft, verschiebbar gelagert, und zwar in der Betriebsstellung der Führungseinheit 17 in einer Verschieberichtung auf die Trägerband-Zugwalze 21 zu.

Zur Ausübung einer Anpresskraft auf das Trägerband 12 in der Betriebsstellung der Führungseinheit 17 ist eine Federeinrichtung 121 vorgesehen (vgl. die Fig. 7 bis 9), die die beiden Trägerband-Andruckrollen 23 jeweils in ihrer Verschieberichtung und damit aufeinander zu vorspannt, insbesondere zieht. Durch die Federeinrichtung 121 kann automatisch eine insbesondere passende Anpress- und damit Vorschubkraft auf das Trägerband 12 erzeugt werden.

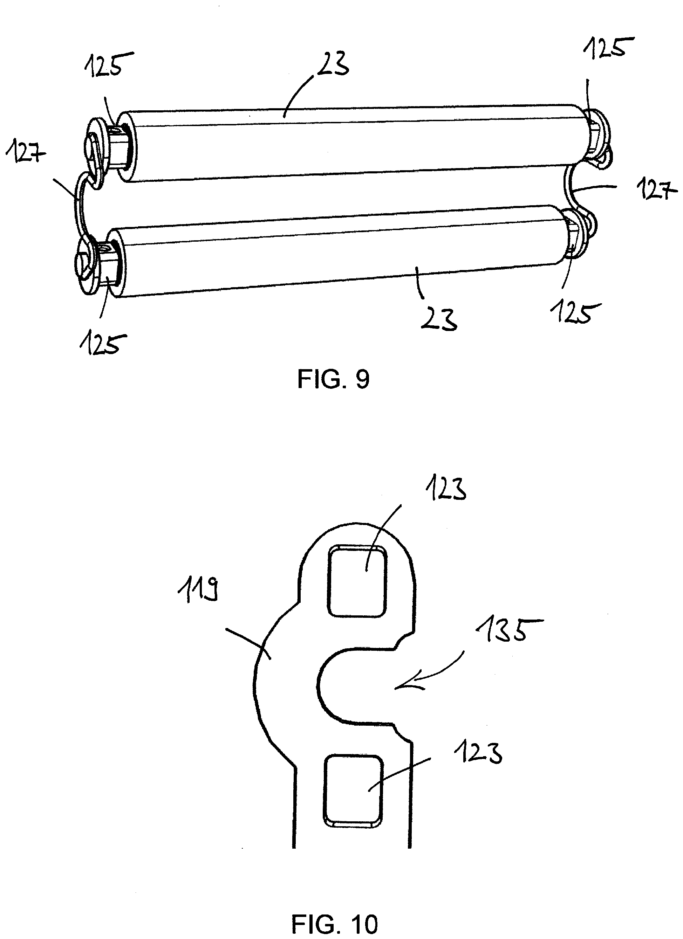

In den beiden Haltearmen 119, von denen in Fig. 10 der in den Fig. 7 und 8 hintere Haltearm 119 dargestellt ist, sind jeweils zwei Führungsbahnen 123 vorgesehen, die jeweils als ein rechteckförmiger, gerader Schlitz ausgebildet sind. In den Führungsbahnen 123, die die Haltearme 119 durchsetzen, sind die beiden Trägerband-Andruckrollen 23 mit ihren beiden axialen Enden jeweils verschiebbar geführt. Hierzu sind die axialen Enden der Trägerband-Andruckrollen 23 jeweils mit einem Gleitstein 125 versehen (vgl. Fig. 9), der in der jeweiligen Führungsbahn 123 verschiebbar geführt ist. Der in Fig. 10 dargestellte und in den Fig. 7 und 8 hintere Halterarm 119 weist in Vergleich zu dem in den Fig. 7 und 8 vorderen Haltearm 119 eine Aussparung 135 auf, um in der Betriebsstellung der Führungseinheit 17 ein Durchgreifen der Trägerband-Zugwalze 21 zu ermöglichen.

Konkret umfasst die Federeinrichtung 121 zwei Zugfedern 127, die jeweils außerhalb des zwischen den beiden Haltearmen 119 ausgebildeten Zwischenraums und jeweils an einen der beiden Haltearme 119 anliegend angeordnet sind. In den Fig. 7 und 8 ist lediglich eine der beiden Zugfedern 127 erkennbar. Die eine der beiden Zugfedern 127 greift dabei an dem einen der beiden axialen Enden der einen Trägerband-Andruckrolle 23 und an dem auf derselben Seite liegenden axialen Ende der anderen Trägerband-Andruckrolle 23 an, und die andere Zugfeder 127 an den anderen beiden axialen Enden. Die Zugfedern 127 sind dabei jeweils als ein langgestrecktes Drahtbiegeteil ausgebildet, das in einer Ebene verläuft und nicht gewunden ist, d.h. keine Wicklungen aufweist. An ihren beiden Drahtenden ist die jeweilige Zugfeder 127 hakenförmig ausgebildet, so dass sie einfach an den beiden auf derselben Seite liegenden axialen Enden der beiden Trägerband-Andruckrollen 23 befestigt werden kann.

Beim Verschwenken der Führungseinheit 17 aus der in den Fig. 2 und 3 gezeigten Einsetzstellung in die in den Fig. 1 und 4 gezeigte Betriebsstellung werden die beiden Trägerband-Andruckrollen 23 durch die Trägerband-Zugwalze 21 und gegen die Vorspannung der Federeinrichtung 121 auseinander gedrückt, d.h. der Abstand zwischen den beiden Trägerband-Andruckrollen 23 vergrößert sich. Die Betriebsstellung der Führungseinheit 17 kann dabei insbesondere dann erreicht werden, wenn sich die Trägerband-Zugwalze 21 in etwa auf Höhe der zu den beiden Rotationsachsen der beiden Trägerband-Andruckrollen 23 senkrechten Verbindungsgeraden befindet, oder sie kann bereits zuvor erreicht werden. Es kann aber auch vorgesehen sein, dass die Trägerband-Zugwalze 21 - relativ gesehen - über diese Verbindungsgerade hinaus in den Zwischenraum hineingeschwenkt wird. Die Verschwenkbewegung der Führungseinheit 17 gliedert sich dann in eine erste Phase, in der die Trägerband-Zugwalze 21 - relativ gesehen - bis zu der Verbindungsgeraden verschwenkt wird, und in eine an die erste Phase anschließende zweite Phase, in der die beiden Trägerband-Andruckrollen 23 durch die vorgespannte Federeinrichtung 121 wieder aufeinander zu verschoben werden, wodurch sich der der Abstand zwischen den beiden Trägerband-Andruckrollen 23 wieder verringert. Es findet somit eine Art Verrastung zwischen den beiden Trägerband-Andruckrollen 23 und der Trägerband-Zugwalze 21 statt, wodurch die Führungseinheit 17 in der Betriebsstellung gehalten werden kann.

Darüber hinaus umfasst die Führungseinheit 17 einen Sensor 129 zur Erkennung der Etiketten, insbesondere einen optischen Sensor, insbesondere eine Lichtschranke (vgl. Fig. 2), der bzw. die in Transportrichtung 25 des Trägerbands 12 gesehen zwischen der weiteren Trägerband-Zugwalze 71 und der weiteren Trägerband-Andruckrolle 73 einerseits und dem Druckkopf 15 und dem Gegenelement 19 andererseits angeordnet ist. Der Etikettensensor 129 ist dafür vorgesehen, die Vorderkanten der Etiketten zu erkennen, um den Antrieb des Trägerbands 12 mit der Steuerung für den Druckkopf 15 zu synchronisieren. Mit dem Etikettensensor 129 können insbesondere weiße Etiketten, Schmucketiketten und transparente Etiketten mit Blackmarks auf dem Trägerband 12 detektiert werden.

Transparente Etiketten, die auf einem Trägerband 12 ohne Blackmarks aufgebracht sind, hingegen können von dem Etikettensensor 129 nicht erkannt werden. Zur Erkennung derartiger Etiketten ist ein weiterer Sensor 131, nämlich ein Ultraschall-Sensor, vorgesehen (vgl. Fig. 2), der in Transportrichtung 25 des Trägerbands 12 gesehen zwischen der weiteren Trägerband-Zugwalze 71 und der weiteren Trägerband-Andruckrolle 73 einerseits und dem Druckkopf 15 und dem Gegenelement 19 andererseits angeordnet ist.

Für einen Wechsel der Etikettenrolle 39 wird ausgehend von der Betriebsstellung des Etikettendruckers in Fig. 1 zunächst die Rändelschraube 67 gelöst, dann wird der Hebel 59 im Uhrzeigersinn in seine Freigabestellung verschwenkt, um die Verhakung mit der Führungseinheit 17 zu lösen, und dann wird die Führungseinheit 15 gegen den Uhrzeigersinn in ihre Einsetzstellung für das Trägerband 12 verschwenkt. Sofern der weitere Antrieb mit der weitere Trägerband-Zugwalze 71 und der weitere Trägerband-Andruckrolle 73 vorhanden ist, muss zusätzlich das Schwenkelement 75 im Uhrzeigersinn in seine Einsetzstellung für das Trägerband 12 verschwenkt werden. Dies kann zu jedem beliebigen Zeitpunkt erfolgen. Anschließend kann das verbrauchte Trägerband 12 aus dem Etikettendrucker 11 entnommen und das neue Trägerband einfach von vorne in den Etikettendrucker 11 eingesetzt bzw. eingelegt werden.

Für einen Wechsel der Thermotransferbandrolle 49 werden zunächst die vorstehend erläuterten Schritte für einen Wechsel der Etikettenrolle 39 vorgenommen, ggf. mit Ausnahme des Verschwenkens des optionalen Schwenkelements 75. Anschließend wird der Blockierstift 69 nach vorne gezogen und die Druckkopfeinheit 13 kann im Uhrzeigersinn in ihre Einsetzstellung für das Thermotransferband 44 verschwenkt werden. Anschließend kann das verbrauchte Thermotransferband 44 aus dem Etikettendrucker 11 entnommen und das neue Thermotransferband einfach von vorne in den Etikettendrucker 11 eingesetzt bzw. eingelegt werden.

Für einen Wechsel bzw. Austausch der Führungseinheit 17 werden zunächst die vorstehend erläuterten Schritte für einen Wechsel der Etikettenrolle 39 vorgenommen, ggf. mit Ausnahme des Verschwenkens des optionalen Schwenkelements 75. Anschließend wird die Rändelschraube 87 gelöst und die Führungseinheit 17 kann nach vorne abgezogen und durch eine andere Führungseinheit ersetzt werden.

Für einen Wechsel bzw. Austausch der Druckkopfeinheit 13 werden zunächst die vorstehend erläuterten Schritte für einen Wechsel der Thermotransferbandrolle 49 vorgenommen, ggf. mit Ausnahme des Verschwenkens des optionalen Schwenkelements 75. Anschließend wird die Rändelschraube 85 gelöst und die Drucckopfeinheit 13 kann nach vorne abgezogen und durch eine andere Druckkopfeinheit ersetzt werden.

Der vorstehend erläuterte Etikettendrucker ist einfach zu bedienen und flexibel einsetzbar.

### Bezugszeichenliste

- 11: Etikettendrucker
- 12: Trägerband
- 13: Druckkopfeinheit
- 15: Druckkopf
- 15': Thermotransfer-Druckkopf
- 15": Thermodirekt-Druckkopf
- 17: Führungseinheit
- 19: Gegenelement
- 19': Druckwalze
- 19": Gleitplatte
- 21: Trägerband-Zugwalze
- 23: Trägerband-Andruckrolle
- 25: Transportrichtung
- 27: Spendekante
- 29: Winkelelement
- 31,33: Winkelarm
- 35, 37: Umlenkrolle
- 39: Etikettenrolle
- 41: Trägerband-Aufwickelwalze
- 44: Thermotransferband
- 45: Thermotransferband-Zugwalze
- 47: Thermotransferband-Andruckrolle
- 49: Thermotransferbandrolle
- 51: Thermotransferband-Aufwickelwalze
- 53: Schwenkachse
- 55: Druckkopfeinheit-Schwenkachse
- 57: Halteeinrichtung
- 59: Hebel
- 61: Achse
- 63: Ausnehmung
- 65: Stift
- 67: Rändelschraube
- 69: Blockierstift
- 71: weitere Trägerband-Zugwalze
- 73: weitere Trägerband-Andruckrolle
- 75: Schwenkelement
- 77: weitere Schwenkachse
- 79: Trägerplatte
- 81: erste Aufnahme
- 83: zweite Aufnahme
- 85: Rändelschraube
- 87: Rändelschraube
- 89: Dämpfungselement
- 91: erster Motor
- 93: Zahnriemen
- 95: weiteren Zahnriemen
- 97: Rutschkupplung
- 99: Getriebe
- 101: weitere Rutschkupplung
- 103: zweiter Motor
- 105: weiterer Zahnriemen
- 107: dritter Motor
- 109: weiterer Zahnriemen
- 111: weiterer Zahnriemen
- 113: Zahnrad
- 115: Zahnrad
- 117: Halterung
- 119: Haltearm
- 121: Federeinrichtung
- 123: Führungsbahn
- 125: Gleitstein
- 127: Zugfeder
- 129: optischer Sensor
- 131: Ultraschall-Sensor
- 133: Transportrichtung
- 135: Aussparung
- 137: Kunststoffteil
- 139: Sperröffnung

## Patentansprüche

1. Etikettendrucker zum Bedrucken von auf einem Trägerband (12) aufgebrachten, insbesondere auf Rolle gewickelten Etiketten, umfassend
eine erste Aufnahme (81) für eine Druckkopfeinheit (13) mit einem Druckkopf (15),
wenigstens zwei voneinander verschiedene, jeweils als austauschbares Modul ausgebildete Druckkopfeinheiten (13) jeweils mit einem Drucckopf (15), wobei in einem zusammengesetzten Zustand wahlweise eine der beiden Druckkopfeinheiten (13) von der ersten Aufnahme (81) aufgenommen ist,
eine zweite Aufnahme (83) für eine Führungseinheit (17) für das Trägerband (12) mit einem Gegenelement (19) zu dem Druckkopf (15), das dazu ausgebildet ist, das Trägerband (12) mit den Etiketten in Anlage an dem Druckkopf (15) zu halten, und
wenigstens zwei voneinander verschiedene, jeweils als austauschbares Modul ausgebildete Führungseinheiten (17) für das Trägerband (12) jeweils mit einem Gegenelement (19) zu dem Druckkopf (15), das dazu ausgebildet ist, das Trägerband (12) mit den Etiketten in Anlage an dem Drucckopf (15) zu halten, wobei in dem zusammengesetzten Zustand wahlweise eine der beiden Führungseinheiten (17) für das Trägerband (12) von der zweiten Aufnahme (83) aufgenommen ist.

2. Etikettendrucker nach Anspruch 1,
**dadurch gekennzeichnet,**
**dass** die erste und die zweite Aufnahme (81, 83) jeweils einen horizontal angeordneten, insbesondere als Rundstab ausgebildeten Haltedorn, umfassen, der jeweils mit einem Ende an einem Träger (79), insbesondere einer Trägerplatte, befestigt ist und dessen anderes Ende freitragend von dem Träger (79) absteht, wobei die beiden Druckkopfeinheiten (13) jeweils von dem freitragenden Ende her auf die erste Aufnahme (81) aufschiebbar sind und wobei die beiden Führungseinheiten (17) für das Trägerband (12) jeweils von dem freitragenden Ende her auf die zweite Aufnahme (83) aufschiebbar sind.

3. Etikettendrucker nach Anspruch 1 oder 2,
**dadurch gekennzeichnet,**
**dass** die jeweilige Druckkopfeinheit (13) mittels einer per Hand lösbaren Schraube (85), insbesondere Rändelschraube, an der ersten Aufnahme (81) befestigt ist und/oder dass die jeweilige Führungseinheit (17) mittels einer per Hand lösbaren Schraube (87), insbesondere Rändelschraube, an der zweiten Aufnahme (83) befestigt ist.

4. Etikettendrucker nach einem der vorstehenden Ansprüche,
**dadurch gekennzeichnet,**
**dass** die jeweilige Druckkopfeinheit (13) unabhängig davon, ob bereits die jeweilige Führungseinheit (17) für das Trägerband (12) von der zweiten Aufnahme (83) aufgenommen ist, von der ersten Aufnahme (81) aufnehmbar ist, und dass die jeweilige Führungseinheit (17) für das Trägerband (12) unabhängig davon, ob bereits die jeweilige Druckkopfeinheit (13) von der ersten Aufnahme (81) aufgenommen ist, von der zweiten Aufnahme (83) aufnehmbar ist.

5. Etikettendrucker nach einem der vorstehenden Ansprüche,
**dadurch gekennzeichnet,**
**dass** im zusammengesetzten Zustand die jeweilige Druckkopfeinheit (13) um die erste Aufnahme (81) zwischen einer Betriebsstellung und einer Einsetzstellung für ein Thermotransferband (44) verschwenkbar gelagert ist und/oder dass im zusammengesetzten Zustand die jeweilige Führungseinheit (17) für das Trägerband (12) um die zweite Aufnahme (83) zwischen einer Betriebsstellung und einer Einsetzstellung für das Trägerband (12) verschwenkbar gelagert ist.

6. Satz von voneinander verschiedenen Zubehörteilen (13, 17) für einen selben Etikettendrucker (12), der zum Bedrucken von auf einem Trägerband (12) aufgebrachten, insbesondere auf Rolle gewickelten Etiketten ausgebildet ist, **dadurch gekennzeichnet, dass** die Zubehörteile (13, 17) wenigstens zwei Druckkopfeinheiten (13) jeweils mit einem Druckkopf (15) und/oder wenigstens zwei Führungseinheiten (17) für das Trägerband (12) jeweils mit einem Gegenelement (19) zu einem Druckkopf (15), das dazu ausgebildet ist, das Trägerband (12) mit den Etiketten in Anlage an dem Druckkopf (15) zu halten, umfassen, wobei die Zubehörteile (13, 17) jeweils als austauschbares Modul ausgebildet sind.

7. Etikettendrucker oder Satz von voneinander verschiedenen Zubehörteilen nach einem der vorstehenden Ansprüche,
**dadurch gekennzeichnet,**
**dass** die Druckkopfeinheiten (13) eine erste und eine zweite Druckkopfeinheit (13) umfassen, wobei die Druckköpfe (15) der ersten und der zweiten Druckkopfeinheit (13) voneinander verschieden sind und/oder dass die Führungseinheiten (17) eine erste und eine zweite Führungsfeinheit (17) umfassen, wobei die Gegenelemente (19) der ersten und der zweiten Führungseinheit (17) voneinander verschieden sind.

8. Etikettendrucker oder Satz von voneinander verschiedenen Zubehörteilen nach Anspruch 7,
**dadurch gekennzeichnet,**
**dass** der Druckkopf (15) der ersten Druckkopfeinheit (13) als Thermotransfer-Druckkopf (15') und der Druckkopf (15) der zweiten Druckkopfeinheit (13) als Thermodirekt-Druckkopf (15") ausgebildet ist.

9. Etikettendrucker oder Satz von voneinander verschiedenen Zubehörteilen nach Anspruch 7 oder 8,
**dadurch gekennzeichnet,**
**dass** das Gegenelement (19) der ersten Führungseinheit (17) als angetriebene Druckwalze (19') und das Gegenelement (19) der zweiten Führungseinheit (17) als, insbesondere metallische und/oder mit einem Dämpfungselement (89), insbesondere einem Filz, versehene, Gleitplatte (19") ausgebildet ist.

## Claims

1. A label printer for printing labels applied to a carrier tape (12), in particular wound onto a roll, comprising
a first receiver (81) for a printhead unit (13) having a printhead (15);
at least two mutually different printhead units (13) which are each configured as a replaceable module and which each have a printhead (15), wherein one of the two printhead units (13) is selectively received by the first receiver (81) in an assembled state;
a second receiver (83) for a guide unit (17) for the carrier tape (12) having a counter-element (19) to the printhead (15) which is configured to hold the carrier tape (12) with the labels in contact with the printhead (15); and
at least two mutually different guide units (17) for the carrier tape (12) which are each configured as a replaceable module and which each have a counter-element (19) to the printhead (15) which is configured to hold the carrier tape (12) with the labels in contact with the printhead (15), wherein one of the two guide units (17) for the carrier tape (12) is selectively received by the second receiver (83) in the assembled state.

2. A label printer in accordance with claim 1,
**characterized in that**
the first and second receivers (81, 83) each have a horizontally arranged holding mandrel which is in particular configured as a round bar, which is fastened with a respective one end to a support (79), in particular to a support plate, and whose other end projects from the support (79) in a self-supporting manner, with the two printhead units (13) each being able to be pushed from the self-supporting end onto the first receiver (81), and with the two guide units (17) for the carrier tape (12) each being able to be pushed from the self-supporting end onto the second receiver (83).

3. A label printer in accordance with claim 1 or claim 2,
**characterized in that**
the respective printhead unit (13) is fastened to the first receiver (81) by means of a screw (85) which can be loosened by hand, in particular a knurled screw; and/or **in that** the respective guide unit (17) is fastened to the second receiver (83) by means of a screw (87) which can be loosened by hand, in particular a knurled screw.

4. A label printer in accordance with any one of the preceding claims, **characterized in that**
the respective printhead unit (13) can be received by the first receiver (81) irrespectively of whether the respective guide unit (17) for the carrier tape (12) is already received by the second receiver (83); and **in that** the respective guide unit (17) for the carrier tape (12) can be received by the second receiver (83) irrespectively of whether the respective printhead unit (13) is already received by the first receiver (81).

5. A label printer in accordance with any one of the preceding claims, **characterized in that**,
in the assembled state, the respective printhead unit (13) is pivotably supported about the first receiver (81) between an operating position and an insertion position for a thermal transfer tape (44); and/or **in that**, in the assembled state, the respective guide unit (17) for the carrier tape (12) is pivotably supported about the second receiver (83) between an operating position and an insertion position for the carrier tape (12).

6. A set of mutually different accessory parts (13, 17) for a same label printer (12) which is configured to print labels applied to a carrier tape (12), in particular wound onto a roll, **characterized in that**
the accessory parts (13, 17) comprise at least two printhead units (13) which each have a printhead (15); and/or at least two guide units (17) for the carrier tape (12) which each have a counter-element (19) to a printhead (15) which is configured to hold the carrier tape (12) with the labels in contact with the printhead (15), with the accessory parts (13, 17) each being configured as a replaceable module.

7. A label printer or a set of mutually different accessory parts in accordance with any one of the preceding claims,
**characterized in that**
the printhead units (13) comprise a first and a second printhead unit (13), with the printheads (15) of the first and second printhead units (13) being different from one another; and/or **in that** the guide units (17) comprise a first and a second guide unit (17), with the counter-elements (19) of the first and second guide units (17) being different from one another.

8. A label printer or a set of mutually different accessory parts in accordance with claim 7,
**characterized in that**
the printhead (15) of the first printhead unit (13) is configured as a thermal transfer printhead (15') and the printhead (15) of the second printhead unit (13) is configured as a direct thermal printhead (15").

9. A label printer or a set of mutually different accessory parts in accordance with claim 7 or claim 8,
**characterized in that**
the counter-element (19) of the first guide unit (17) is configured as a driven print roller (19') and the counter-element (19) of the second guide unit (17) is configured as a sliding plate (19") which is in particular metallic and/or which is provided with a damping element (89), in particular with a felt.

## Revendications

1. Imprimante d'étiquettes pour imprimer des étiquettes appliquées sur un ruban porteur (12), en particulier enroulées en un rouleau, comprenant un premier logement (81) pour une unité de tête d'impression (13) pourvue d'une tête d'impression (15),
au moins deux unités de tête d'impression (13) différentes l'une de l'autre, réalisées chacune sous la forme d'un module interchangeable et pourvues chacune d'une tête d'impression (15), l'une des deux unités de tête d'impression (13) étant reçue sélectivement par le premier logement (81), dans un état assemblé,
un deuxième logement (83) pour une unité de guidage (17) pour le ruban porteur (12), ayant un contre-élément (19) complémentaire à la tête d'impression (15), qui est réalisé pour maintenir le ruban porteur (12) avec les étiquettes en appui contre la tête d'impression (15), et
au moins deux unités de guidage (17) pour le ruban porteur (12), différentes l'une de l'autre et réalisées chacune sous la forme d'un module interchangeable, ayant chacune un contre-élément (19) complémentaire à la tête d'impression (15), qui est réalisé pour maintenir le ruban porteur (12) avec les étiquettes en appui contre la tête d'impression (15), l'une des deux unités de guidage (17) pour le ruban porteur (12) étant reçue sélectivement par le deuxième logement (83), dans l'état assemblé.

2. Imprimante d'étiquettes selon la revendication 1,
**caractérisée en ce que**
les premier et deuxième logements (81, 83) comprennent chacun un mandrin de maintien disposé horizontalement, réalisé en particulier sous la forme d'une tige ronde, qui est fixé par une extrémité à un support (79), en particulier à une plaque de support, et dont l'autre extrémité dépasse en porte-à-faux du support (79), les deux unités de tête d'impression (13) pouvant être poussées chacune sur le premier logement (81) depuis l'extrémité en porte-à-faux, et les deux unités de guidage (17) pour le ruban porteur (12) pouvant être poussées chacune sur le deuxième logement (83) depuis l'extrémité en porte-à-faux.

3. Imprimante d'étiquettes selon la revendication 1 ou 2,
**caractérisée en ce que**
l'unité de tête d'impression (13) respective est fixée au premier logement (81) au moyen d'une vis (85) à desserrer à la main, en particulier une vis moletée, et/ou **en ce que**
l'unité de guidage (17) respective est fixée au deuxième logement (83) au moyen d'une vis (87) à desserrer à la main, en particulier une vis moletée.

4. Imprimante d'étiquettes selon l'une des revendications précédentes, **caractérisée en ce que**
l'unité de tête d'impression (13) respective peut être reçue par le premier logement (81), indépendamment de savoir si l'unité de guidage (17) respective pour le ruban porteur (12) est déjà reçue par le deuxième logement (83), et **en ce que**
l'unité de guidage (17) respective pour le ruban porteur (12) peut être reçue par le deuxième logement (83), indépendamment de savoir si l'unité de tête d'impression (13) respective est déjà reçue par le premier logement (81).

5. Imprimante d'étiquettes selon l'une des revendications précédentes, **caractérisée en ce que**
dans l'état assemblé, l'unité de tête d'impression (13) respective est montée autour du premier logement (81) de façon mobile en pivotement entre une position de fonctionnement et une position d'insertion pour un ruban de transfert thermique (44), et/ou **en ce que**
dans l'état assemblé, l'unité de guidage (17) respective pour le ruban porteur (12) est montée autour du deuxième logement (83) de façon mobile en pivotement entre une position de fonctionnement et une position d'insertion pour le ruban porteur (12).

6. Ensemble d'accessoires (13, 17) différents l'un de l'autre pour une même imprimante d'étiquettes (12) réalisée pour imprimer des étiquettes appliquées sur un ruban porteur (12), en particulier des étiquettes enroulées en un rouleau,
**caractérisé en ce que**
les accessoires (13, 17) comprennent au moins deux unités de tête d'impression (13) pourvues chacune d'une tête d'impression (15) et/ou au moins deux unités de guidage (17) pour le ruban porteur (12) ayant chacune un contre-élément (19) complémentaire à une tête d'impression (15), qui est réalisé pour maintenir le ruban porteur (12) avec les étiquettes en appui contre la tête d'impression (15), les accessoires (13, 17) étant réalisés chacun sous la forme d'un module interchangeable.

7. Imprimante d'étiquettes ou ensemble d'accessoires différents l'un de l'autre selon l'une des revendications précédentes,
caractérisé(e) en ce que
les unités de tête d'impression (13) comprennent une première et une deuxième unité de tête d'impression (13), les têtes d'impression (15) de la première et de la deuxième unité de tête d'impression (13) étant différentes l'une de l'autre, et/ou en ce que
les unités de guidage (17) comprennent une première et une deuxième unité de guidage (17), les contre-éléments (19) de la première et de la deuxième unité de guidage (17) étant différents l'un de l'autre.

8. Imprimante d'étiquettes ou ensemble d'accessoires différents l'un de l'autre selon la revendication 7,
caractérisé(e) en ce que
la tête d'impression (15) de la première unité de tête d'impression (13) est réalisée sous la forme d'une tête d'impression à transfert thermique (15'), et la tête d'impression (15) de la deuxième unité de tête d'impression (13) est réalisée sous la forme d'une tête d'impression thermique directe (15").

9. Imprimante d'étiquettes ou ensemble d'accessoires différents l'un de l'autre selon la revendication 7 ou 8,
caractérisé(e) en ce que
le contre-élément (19) de la première unité de guidage (17) est réalisé sous la forme d'un cylindre de pression entraîné (19'), et le contre-élément (19) de la deuxième unité de guidage (17) est réalisé sous la forme d'une plaque de glissement (19"), en particulier métallique et/ou pourvue d'un élément amortisseur (89), en particulier d'un feutre.
